# EUROPEAN PATENT APPLICATION

(11) **EP 4 530 467 A1**
(43) Date of publication of application: **02.04.2025**
(21) Application number: 23201053.8
(22) Date of filing: 29.09.2023
(51) Int. Cl.: F04B 35/04, H01R 13/52

(54) **ELECTRICAL FEEDTHROUGH ASSEMBLY WITH AUGMENTED CREEPAGE DISTANCE**

(71) Applicant: SCHOTT AG, 55122 Mainz (DE)
(72) Inventor: Hartl, Helmut, 84028 Landshut (DE)
(74) Representative: Schott Corporate IP

(57) **Abstract**

The present disclosure relates to electrical feedthrough assemblies in general, especially to electrical feedthrough assemblies that may be attached to a housing, preferably a housing for an E-compressor, an electrical storage device, a pressure sensor or the like. In particular, the present disclosure relates to electrical feedthrough assemblies that are suited for high-voltage applications while at the same time being of minimum size.

## Description

### Field of invention

The present disclosure relates to electrical feedthrough assemblies in general, especially to electrical feedthrough assemblies that may be attached to a housing, preferably a housing for an E-compressor, an electrical storage device, a pressure sensor or the like. In particular, the present disclosure relates to electrical feedthrough assemblies that are suited for high-voltage applications while at the same time being of minimum size.

### Background of invention

Electrical feedthrough assemblies usually comprise base bodies made of a metal material and comprising at least one through hole arranged within the base body, with a pin that is also made of metal arranged within the through hole. The pin is held by an insulating material so that it is held in an electrical insulating way. The pin may then be electrically contacted. These feedthrough assemblies may be employed in various applications such as in electrical storage devices such as batteries, in pressure sensors or the like. Preferably, the insulating material seals the pin within the through hole so that a preferably fluid-tight seal is achieved.

Various attempts have been made to optimize electrical feedthrough assemblies in order to adapt them for a wide range of applications. In recent years, applications for feedthrough assemblies tend to be miniaturized while at the same time the feedthrough is applied in high voltage distance environments, thereby increasing the need of small, yet highly reliable feedthrough assemblies, preferably at low cost. Such miniaturized feedthroughs may, for example, be used in hybrid or electric cars, for example in electric compressors or e-compressors.

DE 11 2022 000 077 T5 relates to a hermetic seal and a process of manufacture thereof. The feedthrough assembly of DE 11 2022 000 077 T5 comprises three feedthroughs and may be used in a hybrid or electric car in an e-compressor. In order to provide for an overall miniaturized design of the assembly, the feedthroughs are arranged in a straight line. However, the creepage distance is, in that miniaturized design, determined by the diameter of the insulating material of the feedthrough. In order to increase the creepage distance, a cylinder made of a rubber or plastic material is placed on the pin.

US 11 417 983 B2 also relates to a feedthrough assembly for automotive applications. As can be seen, the sealing material of these feedthroughs is not only filling the opening of the base body of the assembly, but extends along the pin material at least in some embodiments. Further, US 11 417 983 B2 suggests a seal coating may be used, or a further insulating coat that may be present between the pins of the feedthroughs, preferably on both sides of the feedthrough. In this way, the creepage distance for creepage currents is enlarged. However, such a design is costly.

US 8 420 933 B2 relates to a high-pressure-resistant hermetic seal terminal and method of manufacturing the same. The hermetic seal describes in US 8 420 933 B2 is part of a feedthrough assembly that may be used in home appliances such as refrigerators, for example. In order to increase the creepage distance, the openings show a greater diameter in a surface region on both sides of the base body. Also, the sealing material has a portion that extends beyond the surface of the base body and surrounds the pin. However, as in such an application, a compact, miniaturized design is not necessary, the feedthroughs are arranged in a triangle, and the distance between the pins is rather large.

Also Japanese patent application JP 2020/107575 A relates to a hermetic seal for home appliances. Also, the creepage distance is increased by the insulating material forming a portion that extends along the pin beyond the surface of the base body. However, the application does not address the problem of miniaturized feedthrough assembly design.

Chinese utility model CN 212162147 U relates to an airtight terminal using a composite glass material as insulating material for the feedthrough. An inner and an outer layer of an insulating material are formed within the opening of the base body of the terminal and on the pin. Two different glass materials having different coefficients of thermal expansion have to be employed. Further, this utility model does not address the problem of a miniaturized design.

Generally, with respect to electrical feedthrough assemblies for e-compressors, it has to be taken into account that especially in the e-compressor application the housing part is exposed to temperature changes over a large interval of temperatures, temperature shocks and/or vibrations.

Therefore, in the state of the art, in order to provide for a suitable feedthrough assembly, the assembly also designated as "housing part" may, in the area of the openings, comprise a plastic and/or rubber material. The plastic and/or rubber material serves as further electrical insulation of the conductors or pins that are fixed in or fed through the openings. This plastic and/or rubber can also contribute to reduce the risk of short currents, especially in case of wet or humid surroundings, when a water layer and/or dirt layer or the like might deposit on the surface of the insulating material, e.g. glass or glass ceramic material. Such a short circuit can occur in case e.g. a film of a conductive material such as water wet the metal material of the housing and/or the conductor. Such a water film wetting the metal material as well as the conductor can very easily occur in an e-compressor with an e-compressor terminal. This is due to the fact that the e-compressor has a very low temperature e.g. of lower e.g. 5 °C or even negative temperatures, whereas the ambient temperature e.g. in the summer time might be higher than 20 °C. In such a case, a water film will be provided due to condensation. By additionally insulating the conductor from the metal material of the e-compressor housing, especially the cover in form of an e-compressor terminal such short circuits due to conductive films can be prevented.

Electric compressors or e-compressors are widely used in environmentally friendly vehicles to support the operation of the air conditioning system. Further, e-compressors are present in air conditioners, refrigerators, other cooling systems etc. Electric and hybrid vehicles are equipped with battery powered electric compressors. The electric compressors must be hermetically sealed and function with their own motor inside. E-Compressor terminals or feedthrough assemblies are important components of electric compressors and must be designed and manufactured carefully for optimal performance. An e-compressor terminal enables the transfer of large amounts of energy from the battery to the air conditioning compressor, and at the same time must remain reliably gas-tight to prevent refrigerant leakage. Electric compressors have very high performance and durability requirements while also being subjected to harsh environmental conditions. These include high pressure, high humidity and vibration. Compressor terminals or feedthroughs must be able to withstand such adverse conditions without issue. Highly controlled and precise processes are necessary to provide long-term reliable gas-tightness. Moreover, the compressor terminals must deliver extremely high insulation resistance and high voltage capabilities to support future quick-charging technology developments. High current capabilities are also essential to enable upcoming 48 V electrical systems.

However, none of the above-cited documents of the state of the art addresses the problem of miniaturizing the feedthrough assemblies while at the same time ensuring a perfect seal and a high creepage distance. Consequently, there is a need for miniaturized electrical feedthrough assemblies that may be employed in applications where high precision and reliability are required such as in pressure sensors, e-compressors or electrical storage devices or like applications.

### Object of invention

The object of the present invention is to provide for electrical feedthrough assemblies that overcome the problems of the state of the art at least partially.

### Description of invention

The object of the present invention is solved by the subject-matter of the independent claims. Preferred or special embodiments are disclosed in the dependent claims, the description and the figures of this application.

The disclosure therefore relates to an electrical feedthrough assembly comprising a base body having a first and a second side, the base body comprising at least two through holes and at least two pins arranged within the through holes that are electrically isolated from the base body and sealed in the through holes by an insulating material so that at least two feedthroughs are formed in the base body. The coefficient of thermal expansion of the insulating material is smaller than the coefficient of thermal expansion of the base body so that compression seal feedthroughs are provided. At least one of the through holes is configured as a stepped through hole having at least one surface portion adjacent to a side of the base body and a middle portion, wherein the surface portion has a first diameter and the middle portion has a second diameter which is smaller than the first diameter. Preferably, the through holes have a circular shape. The height of the at least one surface portion is smaller than half the thickness of the base body, and a distance between the at least two pins, determined as a distance between a center point of one pin to a center point of the other pin, is in the range of at least 1.2 times and at most 1.6 times of the second diameter of the at least one through hole in the middle portion thereof, and wherein the insulating material is present in both the middle portion and in the at least one surface portion of the through hole.

Such an arrangement has a lot of advantages. The distance between the at least two pins is at least 1.2 times, preferably at least 1.3 times, and at most 1.6 times, preferably at most 1.5 times, and for example at 1.4 times, of the second diameter, that is, the diameter of the at least one through hole in the middle portion thereof, which means that the two pins are spaced very closely to each other. This enables a very compact overall design of the electrical feedthrough assembly. However, the drawback of such a very close arrangement of the pins is that the feedthrough may not be suited for applications with a high voltage distance, as in such a compact design, the creepage distance that is provided by the insulating material may be too small. This, however, is addressed in the electrical feedthrough assembly of the disclosure by shaping at least one through hole so that at least one surface portion is formed that has in said surface portion a larger diameter, i.e. the first diameter, than the diameter in a middle portion, i.e. the second diameter, thereof. As a result, a stepped through hole is provided. The surface portion filled with insulating material increases the creepage distance between the base body and the pin by increasing the insulation distance therebetween. This helps to prevent insulation degradation and electrical shorts caused, for example, by fine metal powders (such as wear debris or chips from a drive system inside a compressor) sticking between the base body and the pin.

The middle portion of the through hole is an important feature of the through hole of the feedthrough assembly of the disclosure, as the middle portion serves for providing a pressure on the insulating material, as the material of the base body has a larger coefficient of thermal expansion, CTE, than the insulating material, helping providing a tight seal and fixture of the pin within the through hole by forming a compression seal, whereas the surface portion having the larger first diameter enlarges the creepage distance. If the distance between the at least two pins is less than 1.2 times of the second diameter, the middle portion cannot provide sufficient pressure on the insulating material for providing a tight seal. If the distance between the at least two pins is more than 1.6 times of the second diameter, the overall design of the feedthrough assembly gets too large.

Surprisingly, inventors found that by designing the feedthrough assembly of the disclosure in such a way, it is possible to provide for hermetic seals while at the same time miniaturizing the feedthrough assembly. Prior to the feedthrough assembly of the invention, in order to provide hermetic feedthrough assemblies, the base body was often shaped in such a way that in the area of the through holes, the base body was designed to have a higher thickness than in other parts of the base body. That is, the base body was reinforced in terms of thickness adjacent to the through holes, in order to provide for a high compression.

In the scope of the present disclosure, the portion of the base body that provides the compression in order to hermetically seal the feedthrough has been diminished in order to provide for a larger creepage distance. Surprisingly, inventors found that by doing so, not only is the creepage distance increased, but it is still possible to achieve a high enough compression. Thus, surprisingly, it is possible to provide for hermetic feedthrough assemblies in a miniaturized design that at the same time have a high creepage distance and are thus suited for high voltage applications.

Base body, insulating material and pin form a metal-insulating material feedthrough by which the through hole of the base body is closed. Preferably, the formed feedthrough is hermetically sealed. Hermetic tightness is in particular understood to mean that the leakage rate of helium at a pressure differential of 1 bar is preferably < 1·10⁻⁷ mbar ls⁻¹, more preferably < 1·10⁻⁸ mbar ls⁻¹, and most preferably < 1·10⁻⁹ mbar ls⁻¹.

The insulating material is present within the middle portion and the surface portion of the through hole, preferably so that the surface of the base body and the surface of the insulating material are flush at the boundary of the stepped through hole and the base body. However, it is also possible that a small gap is formed between the insulating material and the surface of the base body at the boundary of the through hole. However, this might be problematic for high voltage applications.

In the sense of the disclosure, a stepped through hole is understood to refer for a through hole that is configured so that it comprises at least two portions that have different diameters.

While the electrical feedthrough assembly of the disclosure in general may comprise only two through holes and, consequently, two pins, the electrical feedthrough assembly of the disclosure is very well suited for assemblies comprising three or more pins and through holes that are preferably arranged in a line which can be an arc-shaped line or a straight line. Alternatively, pins may also be arranged in a triangular or rectangular shape.

According to one preferred embodiment, three or more pins and through holes are arranged in a straight line. So, according to an embodiment, the at least three through holes and/or the pins are arranged in a straight line, and preferably, in that case, the assembly comprises at least three pins/through holes that are arranged in a straight line, with a pitch, that is, a distance between the at least two pins, here, a distance between two pins next to each other, determined as a distance between a center point of one pin to a center point of the other pin, i.e. the adjacent pin, is between at least 1.2 times and at most 1.6 times of the diameter of the at least one through hole in the middle portion thereof, that is, the second diameter of the at least one through hole in the middle portion or, for short, the "second diameter" or middle portion diameter. Preferably, the pitch is the same between all pins of such a straight line assembly. A straight line assembly according to the disclosure may preferably comprise at least three pins.

According to an alternative advantageous embodiment, three or more pins and/or through holes are arranged in an arc-shaped line. So, according to an embodiment, the at least three through holes and/or the pins are arranged in an arc-shaped line, and preferably, in that case, the assembly comprises at least three pins/through holes that are arranged in an arc-shaped line, with a pitch, that is, a distance between the at least two pins, here, a distance between two pins next to each other, determined as a distance between a center point of one pin to a center point of the other pin, i.e. the adjacent pin, is between at least 1.2 times and at most 1.6 times of the diameter of the at least one through hole in the middle portion thereof, i.e. the "second diameter". Preferably, the pitch is the same between all pins of such an arc-shaped line assembly. An arc-shaped line assembly according to the disclosure may preferably comprise at least three pins.

According to an embodiment, all through holes of the electrical feedthrough assembly are configured as stepped through holes each having at least one surface portion adjacent to a side of the base body having a first diameter and a middle portion having a second diameter which is smaller than the first diameter, wherein the height of the at least one surface portion is smaller than half the thickness of the base body, wherein preferably all surface portions having a first diameter are formed on the same side of the base body. This is advantageous as in this case, the creepage distance is enlarged for all pins of the electrical feedthrough assembly.

According to an embodiment, the at least one through hole is formed as a stepped through hole so that the at least one through hole comprises surface portions formed on both sides of the base body with two first diameters being larger than the second diameter of the middle portion of the at least one through hole, wherein preferably the surface portions are formed identically on both sides of the base body. In other words, in this case the at least one through hole is configured as a stepped through hole on the first side and on the second side of the base body. Preferably, the surface portions having the first diameters are formed identical on both sides of the base body. Shaping the at least one through hole so that it is formed as s stepped through hole on both sides of the base body, as explained above, is advantageous as in this way, the creepage distance is increased on both sides of the assembly.

According to an embodiment, all through holes are formed as stepped through holes comprising surface portions formed on both sides of the base body with two first diameters being larger than the second diameter of the middle portion of the at least one through hole, wherein preferably the surface portions are each formed identically on both sides.

Preferably, in case more than one surface portion with a larger diameter (i.e. the first diameter) is present in a feedthrough assembly according to an embodiment, all surface portions are formed identically. So, preferably, in case the at least one through hole comprises surface portions that are formed on both sides of the base body, the two surface portions are formed identically on both side of the base body. Also, in case all through holes of the assembly comprise at least one surface portion with a larger diameter (i.e. the first diameter) than the diameter of the middle portion (i.e. the second diameter of the through hole) of the respective through hole formed on one side of the base body, i.e. all through holes are configured as stepped through holes each having at least one surface portion adjacent to a side of the base body having a first diameter and a middle portion having a second diameter which is smaller than the first diameter, the surface portions are preferably formed identically. This is advantageous in terms of overall assembly design.

Generally, without being restricted to any embodiment of the disclosure, in case the electrical feedthrough assembly comprises more than one so-called "stepped through hole" according to any embodiment of the through hole and/or the electrical feedthrough assembly as disclosed, these through holes are preferably formed identically. However, in other advantageous embodiments, the through holes may be formed differently with respect to each other and/or at least one through hole may have a surface portion on the first side that is different from the surface portion on the second side of the base body and so on.

The upper limit of the diameter of the surface portion (i.e. the first diameter) depends on the overall design of the feedthrough assembly. In general, each feedthrough is formed separately, so that one might contemplate to design a surface portion whose diameter or diameters (i.e. the diameter(s) of the surface portion(s) or so-called "first diameter(s)") is/are large enough to provide for an increased creepage distance, while at the same time a bar of the side of the base body remains, thereby forming a barrier between the insulating material of one feedthrough from the insulating material of the further feedthrough adjacent to the at least one feedthrough. However, it may also be contemplated to design the surface portion of adjacent feedthroughs so that the surface portions and the insulating material in the surface portions merge into each other.

Generally, without being limited to any of the special embodiments described within the present disclosure, the through holes are formed having a circular cross section, of course within the limits of standard manufacture tolerances. That is, the middle portion and the surface portion(s) of the through holes have circular cross sections that are characterized by having a diameter. At least one of the through holes is formed as a stepped through hole, as explained in detail further above. A stepped through hole comprises at least two portions, one of them arranged at the side (or side face) of the base body and having a first diameter and a further portion arranged in a middle portion having a second, smaller diameter than the first diameter.

According to an embodiment, the base body has a thickness of at least 2 mm and/or at most 6 mm, and/or the middle portion has a height of at least 1 mm and/or at most 4 mm. In that way, the base body can exert sufficient pressure on the insulating material, which ensures a tight seal, while at the same time, a sufficient enlargement of the creepage distance is provided for high voltage and/or high power applications. Preferably, the thickness of the base body is at least 2.5 mm, more preferably at least 3 mm. Further, the thickness of the base body preferably is at most 5.5 mm, more preferably at most 5 mm. Furthermore, preferably, the middle portion has a height of at least 1.5 mm, preferably at least 2 mm, and further preferably, the middle portion has a height of at most 3.5 mm, preferably at most 3 mm.

As has been pointed out further above, the electrical feedthrough assembly of the disclosure generally comprises feedthroughs that are formed as compression seals, that is, the coefficient of thermal expansion of the insulating material is smaller than the coefficient of thermal expansion of the base body so that compression seal feedthrough result. According to an embodiment, the insulating material and the base body may form a substance-to-substance bond, which results in a very tight seal that may even be a hermetic seal. However, according to a further embodiment, it is also possible that a form-lock join is formed that may also be a hermetic seal. In both cases, it is preferred that the insulating material is provided as a preform that very closely matches the form of the through hole.

According to a preferred embodiment of the disclosure, the electrical feedthrough assembly comprises glass as insulating material. The insulating material comprises glass or consists of glass or is made of glass, wherein preferably, the surface of the glass is at least partially a native surface, preferably at least partially a fire-polished surface. Such an embodiment in which the insulating material comprises a glass or consists of glass or is made of glass is very advantageous. For example, during manufacture of the assembly, the insulating material may be provided in the form of a preform that may, for example, comprise or consist of a glass powder, for example in the form of a pellet of glass powder that may even be presintered in order to provide a sufficient mechanical stability for handling during manufacture. The preform may be shaped so that it preferably closely matches the shape of the through hole of the base body. The preform may generally, without being limited to the special embodiment of the insulating material being a glass, also preferably comprise a through hole for inserting the pin. The preform may generally, without being limited to any special embodiment of the disclosure, be placed within the through hole of the base body and the pin may be inserted into the through hole of the preform. Then, base body, preform and pin may be heated so that the glass melts and contacts and/or wets the surface of the base body and the pin. Upon heating, a substance-to-substance bond may be formed between both the insulating material and the pin and the insulating material and the base body. However, this is not necessary and it has been found by the inventors that by shaping the through hole as a stepped through hole and by closely matching the preform shape to the shape of the stepped through hole, a form-lock join may be formed. Surprisingly, in this way, it is still possible to form a very tight seal without forming a melt-reaction zone between the insulating material, especially a glass material, and the material of both the base body and the pin.

According to an embodiment of the feedthrough assembly in which the insulating material comprises a glass or consists of a glass, upon heating, the glass material will melt. In that case, the glass material flows and wets the surface of the base body and the pin and may, in that case, react with the material of the base body and/or the pin, thereby forming a so-called melt-reaction zone. In that case, a substance-to-substance bond may be formed. However, that need not be the case. As explained above, generally, the molten glass generally flows and thereby contacts and/or wets the material of the base body and the pin, so that a very tight seal is formed and the pin is sealed within the through hole by the insulating material. Shaping the preform so that it closely matches the shape of the through hole, especially a stepped through hole, however, generally ensures that a close connection may be formed, either as a substance-to-substance bond or a form-lock join. In that way, a glass-to-metal-seal that preferably is hermetically sealed may result.

In case the insulating material comprises glass of consists of glass or is made of glass, preferably the surface of the glass is at least partially a native surface, preferably at least partially a fire-polished surface. Such a native, preferably fire-polished surface has a high chemical resistance and is also very smooth, preferably having a surface roughness (Rₐ) of at most 0.80 µm, preferably at most 0.75 µm, preferably at most 0.70 µm and/or a surface roughness (R_{z}) of at most 1.00 µm, preferably at most 0.80 µm, more preferably at most 0.60 µm, yet more preferably at most 0.50 µm, most preferably at most 0.40 µm, and preferably a surface roughness (Rₐ) of at least 0.001 µm and/or at a surface roughness (R_{z}) of least 0.001 µm. Advantageous lower limits for (Rₐ) and/or (R_{z}) can be at least 0.01 µm. This offers the opportunity to apply such an electrical feedthrough assembly in very corrosive environments, as the native surface of the glass has, as pointed out, a high chemical resistance compared to surfaces that have been chemically or mechanically processed. In an embodiment, the surface roughness (Rₐ) can also be at most 0.30 µm, preferably at most 0.10 µm, and more preferably at most 0.05 µm. In an embodiment, the surface roughness (R_{z}) can also be at most 0.20 µm, preferably at most 0.10 µm, more preferably at most 0.05 µm. Here, Rₐ refers to the arithmetic average surface roughness. R_{z} refers to the maximum peak-to-valley height of a surface profile and can be measured according to DIN EN ISO 4287:1984.

In the sense of the disclosure, a glass is understood as an inorganic material that is obtained in a melting process and that is, after melting, an amorphous material. In the sense of the disclosure, the glass may be completely amorphous material, or may be a crystallizable or an at least partially crystallized glass that may sometimes also be denoted a so-called "glass ceramic".

According to a further preferred embodiment, the insulating material comprises an extending portion of the insulating material such that the insulating material extends beyond at least one of the sides of the base body along the at least one pin and surrounds it, preferably completely, wherein the extending portion has a third diameter (i.e. the extending portion diameter) that is as great as or smaller than the diameter of the at least one surface portion (i.e. the first diameter) or as great as or smaller than the diameter of the middle portion (i.e. the middle portion diameter or second diameter) of the through hole and wherein the third diameter of said extending portion decreases continuously from the side of the base body along the at least one pin, thereby forming an arc. Preferably, the extending portion of the insulating material is in contact with the at least one pin.

Such an embodiment is very advantageous, as the creepage distance, i.e. insulation distance, is further increased. While the increasement of the creepage distance has been achieved in the state of the art by implementing components made of a material other than that of the insulating material forming the compression seal and being on top of the through hole, for example using organic components such as rubber, the creepage distance is increased according to this embodiment by the insulating material itself, for example by the insulating material being made of glass, being melted during manufacture and thus forming, preferably by surface tension and/or capillary forces, an extending portion along the at least one pin being in contact with it. For providing an extending portion, the preform of the insulating material may be shaped accordingly so that the preform comprises extending parts. In case the insulating material comprises glass or consists of glass or is made of glass, the surface of the extending portion preferably has a native surface, which further improves the chemical stability of the feedthrough assembly.

In the sense of the disclosure, the expression" the extending portion completely surrounds the pin" refers to the extending portion forming a cone structure around the circumference of the pin, without any cuts or openings in the extending portion along the circumference of the pin and, hence, the extending portion. However, the extending portion does not cover the whole surface of the pin as the pin has to be electrically connected.

According to a very preferred embodiment, said extending portion has a height of at least 1.5 mm, preferably at least 2.0 mm, preferably at least 3 mm and/or at most 10 mm, preferably at most 7 mm.

Preferably, according to an embodiment, the feedthrough assembly comprises two extending portions of the insulating material, formed on both sides of the base body, and/or every pin of the assembly comprises an extending portion of the insulating material, wherein preferably each extending portion is formed on the same side of the base body for each pin and/or two extending portions of the insulating material are formed on both sides of the base body for each pin.

Generally, according to an embodiment, not every pin of the electrical feedthrough assembly may have an extending portion of the insulating material. That is, according to an embodiment, several, but not all, pins comprise at least one extending portion of the insulating material, and this at least one extending portion of the insulating material may be formed on different sides of the base body for different pins.

According to a further embodiment, the at least one surface portion has a diameter (i.e., the first diameter) that decreases along its height from the side of the base body towards the middle portion of the through hole. In other words, the surface portion of the stepped through hole has, in this special embodiment, the shape of a section of a cone. Of course, all surface portions at all pins and on both sides of the base body may generally, without being restricted to any of the exemplary embodiments of the disclosure described in detail, be formed in such a way. Also generally, all through holes may be formed identically, that is, with identically formed cone-section like shaped surface portions. However, the shapes may also differ from each other and/or may be different with regard to the sides of the base body.

According to a further embodiment, the at least one pin comprises a surface that is Nickel plated (also "Ni plated") or that is oxidized. In the sense of the disclosure, "Ni plated" relates to a Ni coating that is formed on top of the surface, for example in a galvanic process that is common to the person skilled in the art. Preferably, all of the surface of the pin, that is, also that part of the surface of the pin that is in contact with the insulating material, may be Ni plated (or coated). That means, in other words, that a pin that has been Ni plated (or coated) prior to forming the feedthrough assembly of the disclosure may be employed. A nickel layer provides corrosion protection and a contact layer for better contacting.

In the sense of the disclosure, a Ni plating is understood to refer to a coating (or plating) that is preferably obtained in a wet-chemical process, preferably in an electrochemical plating method that is known in the state of the art. Though usually only referred to as "Ni-plating" or "Nickel plating", the coating may comprise other elements than Nickel, so that a Nickel alloy results. For example, the coating may comprise, in addition to Nickel, elements such as Cobalt, or Zinc, or Iron. In preferred embodiments, the Nickel layer is free of Phosphor. Usually, the film thickness of the Nickel layer is between at least 1 µm and at most 15 µm, preferably between at least 2 µm and at most 8 µm.

Also, according to a further embodiment of the disclosure, the at least one pin, and preferably all pins, and the base body comprise a surface that is Ni plated. Here, in the context of the surface(s) of pin(s) and base body being Ni plated, surface is understood to relate to the chemical nature/composition of the surface (and not to a side face or geometrical face of the base body). Preferably, the Ni plating is done prior to forming the electrical feedthrough assembly of the disclosure.

Generally, using a pin that has been Ni plated prior to assembling the feedthrough assembly has so far been very challenging. A Ni plated surface is not easily wetted by a molten glass so that no strong connection was formed between a Ni plated pin and a glass material unless special measures were taken. However, for the feedthrough assembly of the disclosure, formed as a compression seal and comprising a stepped through hole, it is now possible to form a tight seal even when using Ni plated pins, as in this way, a compression seal may be formed in a very easy, yet efficient way. This is also advantageous, as Ni plating of the base body and/or the pin may be accomplished prior to assembling the feedthrough assembly. This means that Ni plating does not need to take place after assembly, which is advantageous in that the insulating material surface is not subjected to any chemical treatment used in known subsequent nickel plating processes that affect the surface of the insulating material. As a result, the surface quality, specially the surface roughness, of the insulating material outer surfaces originating from the assembly process, especially the at least partially native surface of a glass, can be preserved.

In the sense of the disclosure, a native surface is understood a surface that has not undergone any surface treatment, such as a chemical treatment, e.g. chemical etching, mechanical treatment or the like, after formation. Preferably, the surface is a fire-polished surface at least partially, that is, at least in parts thereof. This means that the surface has at least partially been formed without contact to any further parts, such as machine parts, materials and/or molds. In other words, the surface of the insulating material being at least partially a fire polished surface means that it has been formed, at least partially, contact-free.

Generally, in a preferred embodiment the insulating material comprises glass or consists of glass or is made of glass, wherein the surface of the glass is a native surface, preferably at least partially a fire-polished surface.

According to a further embodiment of the disclosure, the material of the base body is a metal. Preferably, the base body comprises steel, preferably stainless steel. In an advantageous embodiment, the material of the base body comprises structural steel, preferably microalloyed steel, most preferred structural steel in form of microalloyed steel. Microalloyed steel is a type of alloy steel that contains small amounts of alloying elements (0.05 to 0.15 %), including niobium, vanadium, titanium, molybdenum, zirconium, boron and rare-earth metals. They are used to refine the grain microstructure or facilitate precipitation hardening. The yield strength of microalloyed steel is between 275 and 750 MPa without heat treatment. Weldability is good and can even be improved by reducing carbon content while maintaining strength. Fatigue life and wear resistance are superior to similar heat-treated steels. Cold-worked microalloyed steels do not require as much cold working to achieve the same strength as other carbon steel; this also leads to greater ductility. By using microalloyed steel as material, a high bending stiffness and strength could be provided.

According to a further embodiment, the material of the pin is metal. Preferably, the pin comprises or consists of stainless steel or a Ni-Fe-material or a Fe-Cr material or the pin comprises a central core made of copper surrounded by stainless steel or a Ni-Fe-material.

According to a yet further embodiment, the insulating material has a coefficient of thermal expansion, CTE (or a), between 8 * 10⁻⁶/K and 12 * 10⁻⁶/K. For example, the insulating material can be an alkali silicate glass comprising CaO having a CTE in the range of 9 to 10 * 10⁻⁶/K. In the context of the present disclosure, the expansion coefficient is specified as the coefficient of linear thermal expansion. If the specification relates to the coefficient of linear thermal expansion of a glass, this is the nominal coefficient of mean linear thermal expansion according to ISO 7991, which is determined in a static measurement (using a push rod dilatometer). The coefficient of linear thermal expansion of an at least partially crystallized glass is determined dilatometrically. Generally, the values are determined in the temperature range from 20°C to 300°C, if not stated otherwise.

In the sense of the disclosure, a compression seal is understood to refer to an electrical feedthrough assembly in which the CTEs of the respective component, that is, the metal parts, such as the base body and the at least one pin of the electrical feedthrough assembly, and the insulating material, are selected so that the base body exerts a compression upon the insulating material, thereby sealing the feedthrough. In order to obtain such a compression seal especially a glass-to-metal-seal, the thermal expansion coefficient (CTE, as explained further above) of the base body here is selected so as to be larger than the thermal expansion coefficient (CTE) of the insulating material such that, after a thermal treatment in which the insulating material melts and is glazed in the through hole, during cooling thermal contraction of the base body is stronger than in the insulating material. As a result, compression forces are permanently exerted by the base body on the insulating material. These compressive forces preload the insulating material and ensure a particularly durable seal.

In the case of a compression glass-to-metal seal, a difference between the thermal expansion coefficient (CTE, as explained further above) of the base body and the thermal expansion coefficient (CTE) of the insulating material is preferably at least 2 * 10⁻⁶/K and more preferably the difference is at least 5 * 10⁻⁶/K. In an advantageous embodiment the thermal expansion coefficient (CTE) of the base body is preferably selected to be at least 5%, in particular at least 10%, preferably at least 20%, and more preferably at least 50% greater than the thermal expansion coefficient of the insulating material. A coefficient of thermal expansion of the pin material is preferably chosen to be about equal to or less than the coefficient of thermal expansion of the insulation material. Two coefficients of thermal expansion are considered to be about equal if the difference is less than 2 * 10⁻⁶/K.

As far as values for the coefficient of expansion are mentioned above and below in connection with pressure glazing for materials, these refer to the linear thermal coefficient of expansion α in the temperature interval 20-300°C usually given in connection with glass-metal feedthroughs.

The electrical feedthrough assembly described herein is particularly suited for use as a connection terminal for an electric compressor. The feedthrough assembly may be configured as part of a housing of the electric compressor or may be attached to a housing or a part of a housing for an electric compressor.

Accordingly, it is a further aspect of the invention to provide an electric compressor comprising one of the electrical feedthrough assemblies described herein.

It is to be understood that the features mentioned above and those to be explained below can be used not only in the combination indicated in each case, but also in other combinations or alone, without leaving the scope of the present invention.

### Description of figures

The invention will now be further explained with reference to the following figures. They show:

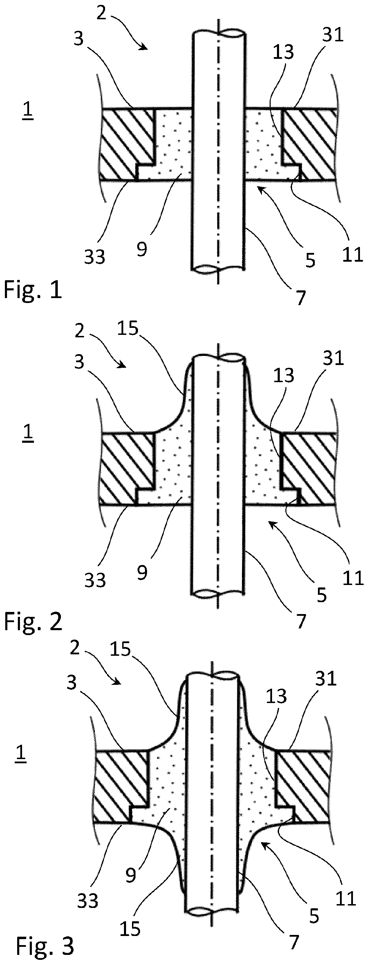

- Figs 1 to 9: schematic and not drawn to scale depictions of electrical feedthrough assemblies according to embodiments of the disclosure.

Fig. 1 shows a sectional view of a portion of electrical feedthrough assembly 1 according to an embodiment of the invention. Electrical feedthrough assembly 1 is especially suited for being attached to a housing, preferably a housing for an e-compressor, an electrical storage device, a pressure sensor or the like. While in general, electrical feedthrough assembly 1 comprises at least two through holes 5 and at least two pins 7 arranged within through holes 5, pins 7 being electrically isolated from base body 3 and sealed in through holes 5 by insulating material 9 so that at least two feedthroughs 2 are formed in base body 3, only one through hole 5 (or feedthrough 2, respectively) is depicted in fig. 1. In general, for the electrical feedthrough assemblies 1 according to the disclosure, without being restricted to any of the special embodiments shown in any figure of the application and/or described in the scope of the disclosure, the coefficient of thermal expansion of insulating material 9 is smaller than the coefficient of thermal expansion of base body 3 so that compression seal feedthroughs 2 are provided.

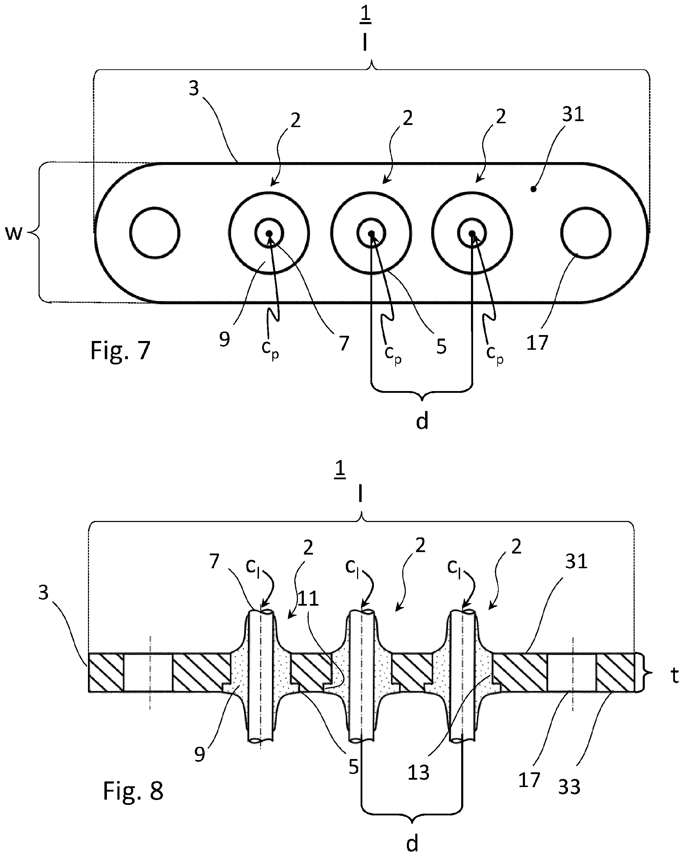

Fig. 1 - as well as figures 2 to 6 - depicts in a schematic and not drawn to scale way the at least one through hole 5 that is configured al a stepped through hole, that is, having at least one surface portion 11 adjacent to a side, or side face, 33, of base body 3 and having a first diameter a1 (not denoted here), and middle portion 13 having a second diameter a2 (not denoted here) which is smaller than the first diameter a1. The height h1 (not denoted here) of the at least one surface portion 11 is smaller than half the thickness t of base body 3, and a distance between the at least two pins, determined as a distance between a center point of one pin 7 to a center point of the other pin 7 is in the range of at least 1.2 times and at most 1.6 times of the second diameter a2 (not denoted here) of the at least one through hole 5 in middle portion 13 thereof. Insulating material 9 is present in both middle portion 13 and in the at least one surface portion 11 of through hole 5. The distance between pins 7 is explained further below with reference to figs. 7 and 8, which are a plain view and a sectional depiction of electrical feedthrough assembly 1 comprising several pins 5, respectively. It is to be noted here that like all depictions, figs. 7 and 8 are schematic and not to scale depictions.

The distance between pins 5 is the distance between the center points of the respective pins, for example center points cₚ in fig. 7 or, in the alternative and with respect to fig. 8, the distance between center lines cₗ in fig. 8.

In the depiction of fig. 1, surface portion 11 having a first, larger diameter than middle portion 13 of through hole 5 is formed on side 33 of base body 3. In general, base body 3 is shaped plate-like, that is, its width and length (extending in a direction perpendicular to pin 7, that is, in the depictions of figs. 1 to 6 in a left-right direction) are larger than its thickness t. The plate-like shape of base body 3 can also be seen in both fig. 7 and fig. 8.

With respect to fig. 1 now, insulating material 9 fills both surface portion 11 as well as the middle portion 13, without any gap being formed. As can be seen in the exemplary depiction of the electrical feedthrough assembly 1 of fig. 1, the surface of insulating material 9 and of base body 3 are flush on both sides (or surfaces) 31, 33 of base body 3. It is noted here that with respect to base body 3, a "surface" relates to the prominent faces of base body 3, that is, side faces or sides 31, 33 for short. While in all depictions of the disclosure, side 33 is the lower side of base body 3, it is to be noted here that this does not necessarily correspond to that side being a "lower" or "inner" side of electrical feedthrough assembly 1 in the later use.

As can be seen in the exemplary depiction in fig. 1, on side 33 of base body 3 the creepage distance between pin 7 and base body 3 is longer than on side 31 because of surface portion 11 of the through hole 5 filled by insulating material 9, which is a general effect of a surface portion 11 in any of the feedthrough assemblies of the disclosure and not being limited to any of the special embodiments, examples and exemplary depictions of electrical feedthrough assemblies of the disclosure.

Fig. 2 is a depiction of a further electrical feedthrough assembly 1 according to an embodiment. Here, in addition to surface portion 11 of feedthrough 2, insulating material 9 comprises extending portion 15 of the insulating material such that insulating material 9 extends beyond one of sides 31, 33 of base body 3 along the at least one pin 7 and completely surrounds it. As can be seen, the extending portion 15 contacts the pin 7. Extending portion 15 has third diameter a3 (not denoted here) that is here smaller than first diameter a1 (not denoted here) of the at least one surface portion 11 of through hole 5. In this example the maximum of third diameter a3 is as great as second diameter a2 (not denoted here) of the middle portion 13. Third diameter a3 of extending portion 15 decreases continuously from side 31 of base body 3 along the at least one pin 7, thereby forming an arc.

As can be exemplarily seen in fig. 2, on side 31 of base body 3 the creepage distance between pin 7 and base body 3 is prolonged because of the extending portion 15 of the insulating material, which is a general effect of a surface portion 11 in any of the feedthrough assemblies of the disclosure and not being limited to any of the special embodiments, examples and exemplary depictions of electrical feedthrough assemblies of the disclosure. For further extending the creepage distance a stepped through hole having a surface portion and an extending portion can be combined (as shown e.g. in fig. 3, 4, 6).

While in the depiction of fig. 2, extending portion 15 of insulating material 9 is formed on side 31 of base body 3 and surface portion 11 is formed on side 33, it is worth noting that generally, without being restricted to the embodiment of depicted in fig. 2, extending portion 15 of insulating material 9 may be formed on the same side of base body 3 that comprises surface portion 11, that is, in the exemplary depiction of electrical feedthrough assembly 1 of fig. 3, on side 33 instead of side 31.

Fig. 3 depicts a further embodiment of electrical feedthrough assembly 1. Here, feedthrough assembly 1 comprises two extending portions 9 of insulating material 9 formed on both sides 31, 33 of base body 3.

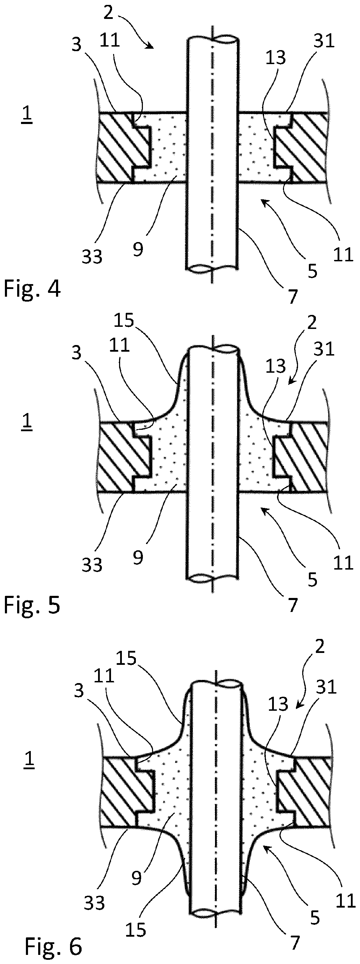

Fig. 4 depicts a yet further embodiment of electrical feedthrough assembly 1. Here, through hole 5 is formed as a stepped through hole that comprises surface portions 11 formed on both sides 31, 33 of base body 3, each with two first diameters a1 (not denoted here) being larger than second diameter a2 (not denoted here) of middle portion 13 of through hole 5. Here, surface portions 11 are both formed identically on both sides 31, 33 of base body 3. As shown here, the heights h1 (not denoted here) of surface portions 11 are smaller than half the thickness t (not denoted here) of base body 3. Middle portion 13 has height h2 (not denoted here). It is noted here that the middle portion is that part of the base body that in particular provides the compression in order to hermetically seal the feedthrough which is a general effect of a middle portion 13 in any of the feedthrough assemblies of the disclosure and not being limited to any of the special embodiments, examples and exemplary depictions of electrical feedthrough assemblies of the disclosure. Of course, surface portions 11 provide for an enlarged creepage distance for pin 7, and here, in the exemplary embodiment of fig. 4, on both sides 31, 33 of electrical feedthrough assembly 1. This enlargement creepage distance, as already stated above, is a general effect of a surface portion 11 in any of the feedthrough assemblies of the disclosure and not being limited to any of the special embodiments, examples and exemplary depictions of electrical feedthrough assemblies of the disclosure.

A still further embodiment of an electrical feedthrough assembly 1 is depicted in fig. 5. Here, as in fig.4, the at least one through hole 5 is formed as a stepped through hole, comprising surface portions 11 formed on both sides 31, 33 of base body 3. In addition to surface portion 11 on side 31, however, electrical feedthrough assembly 1 comprises insulating material 9 that comprises extending portion 15 of the insulating material such that insulating material 9 extends beyond side 31 of base body 3 along pin 7 and completely surrounds pin 7. As can be seen, extending portion is in contact with pin 7 and has a third diameter a3 (not denoted here) that is, in the example depicted in fig. 5, at most as great as first diameter a1 (not denoted here) of surface portion 11 formed on side 31 of base body 3. This third diameter a3 (not denoted here) decreases continuously from the surface of base body 3 along pin 7 and thereby forms an arc.

Finally, fig. 6 shows a yet further embodiment of electrical feedthrough assembly 1, comprising surface portions 11 on each side 31, 33 od base body 3, as well as two extending portions 15 of insulating material 9 of feedthrough 2.

Fig. 7 is a plain view of electrical feedthrough assembly 1 according to an embodiment of the disclosure. Feedthrough assembly 1 comprises, in the embodiment depicted schematically and not drawn to scale, three feedthroughs 2 each comprising insulating material 9, preferably a glass material, that insulates pin 7 electrically from base body 3 and seals pin 7 within through hole 5. Further, electrical feedthrough assembly 1 comprises mounting bore 17. Also denoted are center points cₚ of pins 7 in order to further illustrate the distance d between pins 7 that are, in the electrical feedthrough assembly 1 depicted here, aligned in a straight line. Distance d between the at least two pins 7, is determined as a distance d between a center point cₚ of one pin 7 to a center point cₚ of the other pin 7 and that is in the range of at least 1.2 times and at most 1.6 times of second diameter a2 (not denoted here) of the at least one through hole 5 that is formed as stepped through hole in the middle portion thereof. Preferably, the distance between all pins of the electrical feedthrough assembly 1 of the disclosure is in the range of at least 1.2 and at most 1.6 times that of second diameter a2 of the at least one through hole 5. Further preferably, all through holes 5 of the electrical feedthrough assembly 1 of the disclosure are formed as so-called stepped through holes comprising a surface portion with a first diameter a1 (not denoted here) that is greater than a second diameter a2 (not denoted here) of a middle portion of respective through hole 5. Further preferably, generally, all through holes 5 of an electrical feedthrough assembly 1 of the disclosure are formed equally.

Fig. 7 also shows the in general elongated shape of plate-like base body 3, which means that length I of base body 3 is larger than width w.

For example and with reference to fig. 8, electrical feedthrough assembly 1 according to a further embodiment is depicted schematically and not drawn to scale. The elongated plate-like shape of base body 3 can be seen with thickness t of base body 3 being smaller than length I of base body 3. "Elongated", in the sense of the disclosure, may be understood to refer to the length I of base body 3 being larger than width w (see also fig. 7). Electrical feedthrough assembly 1 comprises three through holes 5 so that three feedthroughs 2 result by insulating, in each of through holes 5, pins 7 by insulating material 9, preferably a glass material. Also, formed on side 33 of feedthrough assembly 1, are surface portions 11 of through holes 5. It is to be noted here that all through holes 5 and consequently, all surface portions 11 of electrical feedthrough assembly 1 of fig. 8 are formed, of course within limits of standard manufacture tolerances, identically. Further, for this embodiment for all feedthroughs 2, insulating material 9 comprises two extending portions 15 formed on both sides 31, 33 of base body 3.

Of course, extending portion 15 of the insulating material 9 may be formed only on one of the sides 31, 33 of base body 3, and also, this extending portion 15 may generally be formed on that side 31, 33 of base body 3 that comprises surface portion 11 of through hole 5. Generally, all combinations of extending portions 9 and surface portions 11 are possible. However, it might be preferred that extending portion 15 is formed on that side 31, 33 of base body 3 that comprises surface portion 11. Also, and preferably, all through holes 5 and all feedthroughs 2 of an electrical feedthrough assembly 1 are formed, within limits of standard manufacture tolerances, identically.

In an advantageous example, the base body may comprise stainless steel having a thermal expansion coefficient CTE in the range of 10 to 14 * 10⁻⁶/K, the insulating material may comprise glass having a CTE in the range of 8 to 10 * 10⁻⁶/K (for example an alkali silicate glass comprising CaO having a CTE in the range of 9 to 10 * 10⁻⁶/K) and the pin may comprise a metal having a CTE in the range of 9 to 10 * 10⁻⁶/K. In order to provide a compression seal feedthrough thermal expansion coefficient of the base body is selected so as to be larger than the thermal expansion coefficient (CTE) of the insulating material such that, after a thermal treatment in which the insulating material melts and is glazed in the through hole, during cooling thermal contraction of the base body is stronger than in the insulating material.

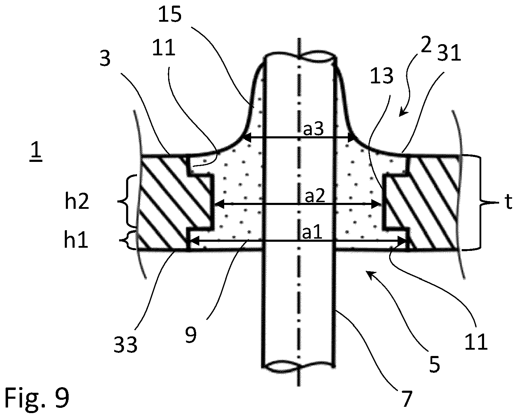

The dimensions of surface portion 11, middle portion 13 and extending portion 15 will now be further explained with reference to the schematic and not drawn to scale depiction in fig. 9. Both height h1 and height 2 extending along the thickness t of base body 3 as depicted in fig. 9. They denote the heights of the respective portions formed within through hole 2. Diameters a1, a2 and a3 are the lateral dimensions of surface portion 11 (or, as in fig. 9 surface portions 11, as in the depiction of fig. 9, through hole 2 comprises two surface portions 11, formed on each side 31, 33 of base body 3), middle portion 13 and extending portion 15, respectively. It is to be noted here that while in the depiction of fig. 9, both surface portions 11 of through hole 2 are formed identically, i.e., having the same diameter a1, generally, without being restricted to the depiction of fig. 9, surface portions 11 may have different diameters a1 and/or heights h1. Diameter a1 may also, in the scope of the disclosure, be denoted simply as "first diameter" or diameter of surface portion 11. Fig. 9 further depicts middle portion 13 of through hole 2, having diameter a2 which in the sense of the disclosure, is also denoted as "second diameter" or "second diameter of middle portion 13". Of course, first and second diameters a1, a2 may also be understood as a first diameter a1 of through hole 2 in a surface portion thereof and a second diameter a2 of through hole 2 in middle portion 13 thereof. Further, diameter a3 is the lateral dimension of extending portion 15 of insulating material 9. In the sense of the disclosure, diameter a3 is also called "third diameter". Diameter a3 varies, as can be seen in the depiction of fig. 9, along the height of pin 7, being at most as large as diameter a1 (or, in case no surface portion 11 is formed on that side of base body 3 on which extending portion 15 is formed, being at most as large as diameter a2) close to the side of base body 3 (here: side 31) and ever decreasing along the length of pin 9.

It is also noted here that a1, a2, and a3 are called "diameters" here, as preferably, through holes 2 are formed having a circular (or round) shape. However, in case through holes 2 have a shape different from a circular shape, "diameters", in the sense of the disclosure, are understood to refer to the largest lateral dimension of through hole 2 in parallel to side 31, 33 of base body 3. Also, generally, sides 31, 33 of base body 3 are in parallel to each other, as depicted in figs 1 to 6 and 8 and 9.

The electrical feedthrough assembly of the disclosure enables a very compact overall design of such a component because of the close arrangement of the pins wherein at the same time a sufficient or even improved creepage distance is provided by the insulating material by means of at least one stepped through hole and preferably by extending portions. Thus, the electrical feedthrough assembly is designed and manufactured to enable the transfer of large amounts of energy from the battery to the air conditioning compressor and at the same time remain reliably gas-tight to prevent any leakage, especially of refrigerant and can therefore be used as component in an electric compressor. Furthermore, electric compressors are affected by high pressure, high humidity and vibration. The feedthrough assembly of the disclosure is able to withstand such adverse conditions. Furthermore, it has extremely high insulation resistance and high voltage capabilities for e.g. 48 V electrical systems.

Besides e-compressors, electrical feedthrough assemblies of the disclosure can be used in other applications where there are strict requirements, for example with regard to hermetic tightness, temperature resistance, thermal shock resistance, etc. In particular, they can be used in pressure sensors, in electrical storage devices, like batteries, accumulators, capacitors, etc.

**Reference numerals**

| | |
|---|---|
| 1 | Electrical feedthrough assembly |
| 2 | feedthrough |
| 3 | base body |
| 5 | through hole |
| 7 | pin |
| 9 | insulating material |
| 11 | surface portion |
| 13 | middle portion |
| 15 | extending portion of insulating material 9 |
| 17 | mounting bore |
| 31,33 | sides of base body 3 |
| cₚ | Center point |
| cₗ | Center line |
| d | Distance between pins, pitch |
| t | Thickness of base body 3 |
| w | Width of base body 3 |
| I | Length of base body 3 |
| a1 | First diameter, diameter of surface portion 11 |
| a2 | Second diameter, diameter of middle portion 13 |
| a3 | Third diameter, diameter of extending portion 15 |
| h1 | Height of surface portion 11 |
| h2 | Height of middle portion 13 |

## Claims

1. Electrical feedthrough assembly (1), especially for the attachment to a housing, preferably a housing for an e-compressor, an electrical storage device, a pressure sensor or the like, comprising a base body (3) having an first and a second side (31, 33), the base body (3) comprising at least two through holes (5) and at least two pins (7) arranged within the through holes (5) that are electrically isolated from the base body (3) and sealed in the through holes (5) by an insulating material (9) so that at least two feedthroughs (2) are formed in the base body (3), wherein the coefficient of thermal expansion of the insulating material (9) is smaller than the coefficient of thermal expansion of the base body (3) so that compression seal feedthroughs are provided,
wherein at least one of the through holes (5) is configured as a stepped through hole having at least one surface portion (11) adjacent to a side (31, 33) of the base body (3) and a middle portion (13), wherein the surface portion (11) has a first diameter (a1) and the middle portion (13) has a second diameter (a2) which is smaller than the first diameter (a1), wherein the height (h1) of the at least one surface portion (11) is smaller than half the thickness (t) of the base body (3), and wherein a distance (d) between the at least two pins (7), determined as a distance between a center point (cₚ) of one pin (7) to a center point (cₚ) of the other pin (7) is in the range of at least 1.2 times and at most 1.6 times of the second diameter (a2) of the at least one through hole (5) in the middle portion (13) thereof, and wherein the insulating material (9) is present in both the middle portion (13) and in the at least one surface portion (11) of the through hole (5).

2. The electrical feedthrough assembly (1) according to claim 1, wherein all through holes (5) are configured as stepped through holes each having at least one surface portion (11) adjacent to a side (31, 33) of the base body (3) having a first diameter (a1) and a middle portion (13) having a second diameter (a2) which is smaller than the first diameter (a1), wherein the height (h1) of the at least one surface portion (11) is smaller than half the thickness (t) of the base body (3) and/or wherein the at least one through hole (5) is formed as a stepped through hole so that the at least one through hole (5) comprises surface portions (11) formed on both sides (31, 33) of the base body (3) with two first diameters (a1) being larger than the second diameter (a2) of the middle portion (13) of the at least one through hole (5),
wherein preferably the surface portions (11) are formed identically on both sides (31, 33) of the base body (3).

3. The electrical feedthrough assembly (1) according to any of claims 1 or 2, wherein all through holes (5) are formed as stepped through holes comprising surface portions (11) formed on both sides (31, 33) of the base body (3) with two first diameters (a1) being larger than the second diameter (a2) of the middle portion (13) of the at least one through hole (5), wherein preferably the surface portions (11) are each formed identically on both sides (31, 33).

4. The electrical feedthrough assembly (1) according to any of claims 1 to 3, wherein the middle portion (13) has a height of at least 1 mm and/or at most 4 mm and/or wherein the base body (3) has a thickness (t) of at least 2 mm and/or at most 6 mm.

5. The electrical feedthrough assembly (1) according to any of claims 1 to 4, wherein the insulating material (9) comprises glass or consists of glass or is made of glass, wherein preferably the surface of the glass is at least partially a native surface, preferably at least partially a fire-polished surface, wherein preferably the surface roughness of the native, preferably fire-polished, surface, is at most 0.80 µm (Rₐ) and/or at most 1.00 µm (R_{z}) and preferably at least 0.001 µm (Rₐ) and/or at least 0.001 µm (R_{z}).

6. The electrical feedthrough assembly (1) according to any of claims 1 to 5, wherein the insulating material (9) comprises an extending portion (15) of the insulating material (9) such that the insulating material (9) extends beyond one of the sides (31, 33) of the base body (3) along the at least one pin (7) and surrounds it, wherein, preferably, the extending portion (15) of the insulating material (9) is in contact with the at least one pin (7), wherein the extending portion (15) has a third diameter (a3) that is as great as or smaller than the first diameter (a1) of the at least one surface portion (11) or as great as or smaller than the second diameter (a2) of a middle portion (13) of the through hole (5) and wherein the third diameter (a3) of said extending portion (15) decreases continuously from the side (31, 33) of the base body (3) along the at least one pin (7), thereby forming an arc.

7. The electrical feedthrough assembly (1) according to claim 6, wherein said extending portion (15) has a height of at least 1.5 mm and/or at most 10 mm, preferably 7 mm.

8. The electrical feedthrough assembly (1) according to any of claims 6 or 7, wherein the electrical feedthrough assembly (1) comprises two extending portions (15) of the insulating material (9) formed on both sides (31, 33) of the base body (3) and/or wherein every pin (7) of the electrical feedthrough assembly (1) comprises an extending portion (15) of the insulating material (9), wherein preferably each extending portion (15) of the insulating material (9) is formed on the same side (31, 33) of the base body (3) for each pin (7) and/or wherein two extending portions (15) of the insulating material (9) are formed on both sides (31, 33) of the base body (3) for each pin (7).

9. The electrical feedthrough assembly (1) according to any of claims 1 to 8, wherein the at least one surface portion (11) has a first diameter (a1) that decreases along its height from the side (31, 33) of the base body (3) towards the middle portion (13) of the through hole (5).

10. The electrical feedthrough assembly (1) according to any of claims 1 to 9, wherein the at least one pin (7) comprises a surface that is Ni plated or is oxidized.

11. The electrical feedthrough assembly (1) according to any of claims 1 to 10, wherein the at least one pin (7), preferably all pins (7), and the base body (3) comprise a surface that is Ni plated.

12. The electrical feedthrough assembly (1) according to any of claims 1 to 11, wherein the base body (3) comprises steel, preferably stainless steel, preferably structural steel.

13. The electrical feedthrough assembly (1) according to any of claims 1 to 12, wherein the at least one pin (7) comprises stainless steel or a Ni-Fe- material or a Fe-Cr material or a central core made of copper surrounded by stainless steel or a Ni-Fe-material.

14. The electrical feedthrough assembly (1) according to any of claims 1 to 13, wherein the insulating material (9) has a coefficient of thermal expansion, CTE, between 8 * 10⁻⁶/K and 12 * 10⁻⁶/K.

15. Electric compressor comprising an electrical feedthrough assembly (1), according to any of claims 1 to 14.
